Europäisches Patentamt

European Patent Office

Office européen des brevets

(11) Publication number: **0 103 331**
**B1**

(12) EUROPEAN PATENT SPECIFICATION

(45) Date of publication of patent specification: 01.06.88

(21) Application number: 83201240.5

(22) Date of filing: 30.08.83

(51) Int. Cl.⁴: **D 06 M 13/38, D 06 M 13/46, D 06 M 13/26, C 07 C 135/02**

(54) **Antistatic composition.**

(30) Priority: 09.09.82 NZ 201857

(43) Date of publication of application:
21.03.84 Bulletin 84/12

(45) Publication of the grant of the patent:
01.06.88 Bulletin 88/22

(84) Designated Contracting States:
AT BE CH DE FR GB IT LI LU NL SE

(56) References cited:
EP-A-0 022 239
DE-A-1 901 194
GB-A-1 222 687
GB-A-2 075 043
US-A-3 296 145

(73) Proprietor: WOOL RESEARCH ORGANISATION
OF NEW ZEALAND INC.
Springs Road
Lincoln Canterbury (NZ)

(72) Inventor: McKinnon, Alan John, Dr.
383 Yaldhurst Road
Christchurch 4 (NZ)
Inventor: Vivian, Allan Joseph
226 Peterborough Street
Christchurch 1 (NZ)
Inventor: Rankin, Douglas Alexander
22 Bewdley Street
Christchurch 2 (NZ)

(74) Representative: Wharton, Peter Robert et al
URQUHART-DYKES & LORD
Beckett's Bank Chambers 19 Cheapside
Bradford West Yorkshire BD1 4HR (GB)

The file contains technical information
submitted after the application was filed and
not included in this specification

Courier Press, Leamington Spa, England.

# 0 103 331

**Description**

This invention relates to an antistatic composition for textiles and more particularly for carpets, and to methods of using same.

Static electrical charges are generated on a person's body when traversing carpeted areas, due to the contact electrification at the shoe sole-carpet interface, and the subsequent distribution of this charge over the body creates a 'body voltage'. The tendency to generate high body voltages is particularly pronounced at low relative humidities. Such static electricity not only causes objectionable shocks when the body is discharged to earth, but can cause serious problems with electronic equipment, present a hazard in the presence of flammable gases (notably in operating theatres), and cause problems during treatment such as pick-up of lint and other adventitious material when dry fabrics or garments are being handled.

Carpets, including wool fibres or filaments, may be rendered free from static electricity by incorporating therein various types of conductive fibres or filaments, used either with or without a conductive primary backing or conductive latex compound. However such an expedient is relatively expensive, and cannot be employed with already made carpets. Alternatively, chemical treatments of various kinds may be applied to the carpet pile fibre to assist in the prevention or dissipation of static charges. One such treatment involves quaternary ammonium compounds. A particular compound, trioctyl/decyl methyl ammonium chloride available commercially as Aliquat 336® (Henkel), and Adogen 464® (Sherex Chemical Co), contains three large alkyl substituents on the nitrogen and is thus water-insoluble.

DE—A—1901194 disclosed di-long chain alkyl quaternary ammonium compounds useful as softening compositions for fabrics.

EP—A—22239 discloses compositions including imidazolines and aminoxides for the liquid paraffin waxing of yarns.

British patent publication No. 2081731 discloses a composition in which the insoluble quaternary compounds is mixed with a polyether compound. Such compositions (usually homogeneous themselves) have the property that when diluted with water to working strength for the most commonly employed application techniques they form a homogeneous solution or a dispersion of the quaternary compound which can be readily applied to textiles.

However the polyether compounds employed may give rise to soiling problems if not removed before use of the carpet, and thus the application of these compositions is effectively precluded for in situ treatments or in piece-finishing.

The invention seeks to provide a composition which gives an acceptable antistatic finish to textiles, which is economical and easy to use, and which overcomes or reduces the above disadvantages.

According to the broadest aspect of the present invention there is provided a textile treatment composition which comprises a water insoluble quaternary ammonium salt and a non-ionic surfactant characterised in that said quaternary ammonium compound has its nitrogen atom substituted with three alkyl substitutes of at least eight carbon atoms each, and said non-ionic surfactant is selected from the phosphine oxides, the sulphoxides, or the tertiary amine oxides containing at least one long-chain alkyl group of at least 12 carbon atoms.

Preferably, the surfactant is a tertiary amine oxide.

According to another aspect of the present invention there is provided a method of imparting antistatic properties to textile materials which includes treating the material with an aqueous solution of a composition as defined above.

The textile materials are advantageously keratinous materials, for example wool, and may be in the form of carpets, piece goods, knitwear, yarn, roving, slubbing or loose stock.

The water-insoluble quaternary ammonium salts are those in which the nitrogen atom has three large alkyl substituents of at least eight carbon atoms each. A particularly useful product is available commercially under the name Aliquat 336 (Henkel).

It has been found that one class of surface-active compounds is particularly effective in producing homogeneous compositions when mixed with water-insoluble quaternary ammonium salts and appropriate amounts of water. Further, these compositions also produce dispersions or homogeneous solutions when diluted with water to the working strength appropriate for commercial application. Particularly effective within this class of surfactants are the tertiary amine oxides; for example, lauryl dimethyl amine oxide as typified by the commercial product Ammonyx LO (Onyx Chemical Company) (Registered Trade Mark). Other surfactants containing similar dipolar hydrophilic groups, such as the sulphoxide and phosphine oxide surfactants, may also be used. For example a typical sulphoxide surfactant, lauryl methyl sulphoxide, behaves similarly to lauryl dimethyl amine oxide, in solubilising water-insoluble quaternary ammonium compounds in dilute aqueous solutions.

The weight ratio between said surfactant and the quaternary ammonium compound in the composition of the invention will depend on a number of factors, including the exact chemical types selected, expected dilution level, active percentage of pure chemical in commercial supplies, and so forth.

Amine oxide surfactants, for example, are commonly sold as aqueous solutions or pastes. For example, Ammonyx LO is supplied as a 30% active aqueous solution. Compositions ranging from a ratio by weight of Ammonyx LO (30% active by mass) to Aliquat 336 of 1.7 to less than 0.5 form clear homogeneous mixtures upon combining and stirring the two components. When diluted with water,

0 103 331

mixtures ranging in the above composition ratio from more than 3.2 to 1 will on high dilution form true homogeneous solutions at working concentrations for exhaustion processes up to at least the greatest dilution of practical interest, which is a concentration of about 50 parts per million Aliquat 336 in the solution.

The concentration of Aliquat 336 in dilute solution at which separation into two phases just commences has been approximately determined for a range of initial ratios of Ammonyx LO/Aliquat 336 concentrations. If the ratio by mass of the two materials is R, and the solubility limit of the cationic compound in %(w/w) is Q, the relationship between the two over a considerable range is approximately given by R=2.0 Q+0.8.

In the case of lauryl methyl sulphoxide, rather similar behaviour occurs, but with homogeneous phases existing over niore restricted composition ranges. Lauryl methyl sulphoxide is soluble in Aliquat 336 at a ratio of 1 part to 10 by weight, but at 1 part to 5 it precipitates. The solubility is enhanced, however, by adding small quantities of water, and for instance a composition of 5 parts Aliquat, 2 parts lauryl methyl sulphoxide, and 3 parts water is a clear homogeneous solution. Such a mixture when diluted to a concentration of 0.075% of Aliquat by weight gives a clear solution, part of which when analysed for Aliquat gives the correct nominal concentration. Such preparations thus appear to be genuine solutions comparable in their utility to the preparations with amine oxides. At a concentration of 0.15% in Aliquat, such a preparation gives by contrast a heterogeneous system.

As the amount of Aliquat is increased, the system Aliquat/Ammonyx LO/water separates into two phases. At very low additions of water, a single phase is again produced.

Such amine oxide compositions may be used as in the examples given below, to give antistatic treatments of wool or wool-rich carpet pile with a high degree of permanence and durability to wear and wet cleaning. The compositions may be applied, *inter alia*, by the following methods:

1. application by exhaustion in a batch process to yarn in a hank dyeing machine or similar vessel, or to loose wool in a loose wool (stock) dyeing machine or similar vessel;
2. application by exhaustion in a continuous process in a yarn scouring machine or similar device; and
3. application as a component of a spinning lubricant formulation.

In addition, two further application procedures are particularly advantageous with the present compositions. The first is to laid carpets *in situ* using a shampoo machine or spray. The second is to carpets in the piece during manufacture by either spray or foam application techniques. In these procedures there is a particular advantage of the compositions of the invention over polyether compositions, arising from the much lower amount of solubilising surfactant employed in the former, and its greater substantivity on the fibre, which factors both reduce the soiling propensity of the compositions to an acceptable level thus allowing the use of compositions as a topical shampoo application or piece finishing treatment.

Another characteristic of the present compositions pertinent to *in situ* application by shampoo machine or piece treatment is that in many cases where two phases are present, especially at relative proportions not far removed from regions of single-phase formation, the system forms a pearlescent mixture that is readily dispersible to a stable emulsion suitable for practical use. This is in marked contrast to emulsions of, for example, Aliquat alone, which separate into relatively non-dispersible layers.

Compositions employing amine oxides have a further advantage in piece-finishing methods involving foam application, in that the amine oxides, as is well-known, are excellent foam-stabilising surfactants, and the diluted formulation can be readily foamed to high blow ratios, thus minimising the wet add-on required and the consequential drying problems in carpet finishing.

In exhaustion treatments carried out as disclosed in UK patent publication No. 2081731, the cationic Aliquat 336 substantially exhausts from the solution but the solubilising surfactant, whether polyether or amine oxide, remains predominantly in the solution and is discharged to waste. Thus, the superior soiling propensity of the present compositions is not fully realised in such exhaustion applications. Nonetheless, the lower soiling propensity of the present compositions, particularly amine oxide preparations, is an advantage over the polyether type formulations.

A further advantage of the present compositions is that, for example, the tertiary amine oxides are fairly effective short-term antistatic agents in their own right. The tertiary amine oxides may thus be regarded to some extent as an additive to the antistatic effect rather than merely conferring a solubilising action on the antistatic agent.

The invention will be illustrated further in the following Examples.

Example 1
Hank-exhaustion treatment (commercial hank treatment, pilot plant carpet make-up)

Wool yarn (R600/2 tex, standard Axminster yarn) was commercially treated in a dye vat after hank dyeing, with 0.9% o.w.w. of 1:1 Aliquat 336:Ammonyx LO mixture, for 20 min at 20°C. After drying, a sample of the yarn was tufted into a small piece of carpet, of 3.97 mm (5/32″) gauge construction with 24 stitches/dm and 10 mm pile height. This was backed with a standard non-conductive carpet latex and a secondary jute back. The body voltages recorded at 21°C, 20% R. H. (by a method similar to AATCC Method 134—1979) were as follows:

3

**0 103 331**

|  | Stepping walk | Scuffing walk |
|---|---|---|
| Rubber soles | −1000 | −1600 |
| Leather soles | +1800 | +2000 |

A comparable untreated carpet produces voltages in the range −10,000 to −15,000 volts, and a treatment giving body voltages of less than ±2500 is regarded as adequate.

Example 2
Continous Brattice Scour Treatment (commercial batch, commercially woven carpet)
A brattice scour bowl liquor was made up to a concentration of 0.06% (w/w) in Aliquat 336 by dissolving 2.4 kg of Aliquat 336/Ammonyx LO mixture in the bath at ambient temperature. Hanks of 80/20 wool/nylon yarn (450 grams each) were passed through this bowl, at a rate of approximately 30 hanks per minute, with a 2 min. residence time. A 5% w/w dispersion of Aliquat 336/Ammonyx LO mixture (1:1) was metered in at a rate of about 1680 ml/min, giving an add-on assuming bath equilibrium of 0.39% w/w of Aliquat 336 on the wool component of the yarn.

An Axminster carpet was then woven, predominantly from the yarn treated as above, with other lots treated similarly also included in the pattern. This was a 7-shot, 7-pitch carpet of 7 mm pile height. When tested for static at 21°C, 20% R. H, the following results were obtained:

Body voltages, volts (3-s time constant)

|  | Stepping walk | Scuffing walk |
|---|---|---|
| Rubber soles | +1700 | +900 |
| Leather soles | +1600 | +1300 |

Such a treatment has then produced an acceptable level of body voltage.

Example 3
Application by Exhaustion on to Stock-dyed Wool
Scoured loose crossbred wool (14 kg) was dyed in the stock carrier of a GRU-15 dyeing machine, with a typical premetallised dye recipe. An Aliquat 336/Ammonyx LO mixture (equal parts by weight, 140 g in all, 0.5% Aliquat 336 oww) was dissolved in the side tank at 20°C, and the liquor transferred to the dyeing vessel containing the wool and circulated for 20 min. The liquor was then dumped, and the wool hydroextracted, dried and converted to yarn (R600/2 tex, 140 tpm, folding twist).
The exhaustion of the Aliquat 336 from the treatment liquor was 91%.
The ·arn was scoured in a commercial tape scour (4 bowls, 3 at 60°C, the last at 50°C, Teric GN9® nonionic detergent in first two bowls) and then tufted into a cut-pile carpet (3.97 mm (5/32″) gauge, 7 mm height, 40 stitches/dm, backed with latex and a secondary backing of jute).
Static tests were carried out on this carpet in the same way with the following results for body oltages:

| Rubber soles, stepping walk | +1000 |
|---|---|
| Leather soles, stepping walk | 0 |

In this experiment, small yarn samples were placed uniformly within the loose wool in the stock carrier, and were subsequently analysed for Aliquat 336 by the ether extraction of the Orange II dyestuff complex.
The results showed that the treatment was satisfactorily level, the quantity of Aliquat 336 recovered from the six yarn samples averaging 0.152% (m/m) with a standard deviation of 0.024.
It is noteworthy that in this Example the quantity of Aliquat 336 remaining on the yarn after scouring is such as to yield a body voltage close to zero

Example 4
Application as a Component of a Wollen Processing Lubricant
Undyed loose wool (10.5 kg) was oiled during blending by hand spraying with 3 litres of a mixture prepared by diluting with water a concentrate of 315 g of Frescolene B and 105 g of 1:1 Aliquat 336/Ammonyx LO mixture. The concentrate in this case was homogeneous but the diluted material was a fairly stable dispersion. The wool was carded and spun on the wollen system to yarn as before (R600/2 tex, 140 tpm ply twist), scoured as in the stock dye application example above, and tufted to the same carpet construction. The body voltages obtained from a test at 21°C, 20% R.H., were:

4

| | |
|---|---|
| Rubber soles, stepping walk | +800 |
| Leather soles, stepping walk | +1400 |

A completely homogeneous lubricant formulation which yields similar results may be made by modifying the mixture somewhat. For example, a concentrate consisting of 50 g Aliquat 336, 150 g Ammonyx LO, and 250 g Frescolene B (Registered Trade Mark) is homogeneous and when diluted to 2.5 litres for application to wool (10 kg) remained homogeneous.

Such formulations have advantages in practical applications over heterogeneous mixtures.

Example 5

Application in Foam Form to Carpet Pieces

Aliquat 336—amine oxide preparations are suitable for application to carpet pieces by either spraying or foam application. The latter has decided advantages in terms of uniformity and control of add-on and penetration, and minimising of water to be subsequently removed in drying. A typical foam application is detailed in the following example.

A dispersion of 1:1 Aliquat:Ammonyx LO (2% w/w) was pumped to the foaming head of a carpet latex foaming unit, and foamed therein at an air delivery pressure of from 0.42 to 0.69 bar (6—10 psi) to produce a foam with a blow ratio of from 15 to 22. This foam was delivered to a foam trough mounted above a revolving horizontal roller. The trough was equipped with a variable aperture and doctor blade so as to enable a uniform foam layer from 6 to 20 mm thick to be carried away by the roller, and delivered down a glass scraper blade bearing against the roller just below the level of its horizontal axis. The foam layer then was allowed to flow from the lower edge of the scraper blade to a carpet passing horizontally immediately beneath it. The carpet was subsequently drawn across a vacuum slot approximately 4 mm wide, to which suction was applied via an ordinary vacuum cleaner.

By appropriately varying the foam add-on, liquor concentration, and suction, it is possible to get satisfactorily uniform foam penetration into the carpet.

A dense carpet was treated with 20 mm height of foam at a blow ratio of 15:1, prepared from the dispersion described above, passed slowly over the vacuum slot, dried, and assessed for uniformity of foam penetration by staining the carpet in cross-section with Orange II. This revealed fairly uniform uptake of Aliquat at all levels in the pile. Different antistatic levels can be achieved by varying the concentration of the starting dispersion.

Example 6

Application by hand-held airless spray to wool carpet

A stable turbid emulsion of 1.8% of an Aliquat 336/Ammonyx LO mixture (50/50 w/w) in water was applied by hand-held airless spray ("Fanjet" (Registered Trade Mark) 123/15 "D" with 1.09 mm hole), using a conical device for fully enclosing the spray and preventing Aliquat particles from being breathed in by the operator. The mixture was sprayed on to 100% wool, tufted carpet, cut pile, with a surface pile weight of 650 g/m$^2$, at the rate of 50% wet add-on on the surface pile weight, spraying at the rate of 725 ml/min in 18 cm wide paths, to give a total add-on of Aliquat 336 of 0.5% on weight of pile fibre. The same carpet was also spray extraction cleaned, with water only, as an additional experiment, using a conventional spray extraction cleaning machine with a pull-back floor tool.

After drying and conditioning both treated and untreated carpets at 23°C and 25% R.H. the following body voltages were measured (values in volts):

| | Neolite rubber | BAM rubber | PVC |
|---|---|---|---|
| Untreated (control) | −13,000 | −10,250 | −9,750 |
| Treated | + 1,400 | 0 | +400 |
| Treated and cleaned | + 1,700 | +250 | +700 |

The effect of the spray extraction cleaning is to very slightly increase the positive body voltage generated.

Example 7

Application by hand-held spray to synthetic carpets

The general procedure of Example 6 was carried out in a range of synthetic carpets as follows:

a 100% acrylic carpet, tufted, cut pile, secondary backed

a 100% polyester carpet, tufted shag pile, secondary backed

a 100% polypropylene carpet, tufted, loop pile, secondary backed

a 100% nylon carpet, tufted, velved, foam backed to give approximately 0.7% Aliquat 336/Ammonyx LO 50/50 mix of 0.35% o.w. fibre, Aliquat 336. The carpets were dried at ambient temperature, and conditioned to 23°C/25% R.H., then tested for antistatic effects.

Static test results: ·

|  | Neolite | BAM | PVC |
|---|---|---|---|
| U/T Polyester | +3,200 | +10,750 | 4,750 |
| Treated | +50 | 0 | 0 |
| U/T Polypropylene | + | −200 | −50 |
| Treated | −50 | 0 | −50 |
| U/T Acrylic | +1,100 | +6,400 | +4,100 |
| Treated | +100 | 0 | 0 |

It can be seen that improved antistatic effects are obtained on all the carpets treated.

Example 8
Use in Knitwear
A batch of fully fashioned knitwear wool sweater bodies was treated in a side paddle machine after drying with 0.9% oww of 1:1 Aliquat 336:Ammonyx mixture for 4 minutes at 10°C.

The goods were hydroextracted and dried in a tumble dryer. On removing from the tumbler the goods were completely free from electrostatic effect and were easy to handle during subsequent sewing, and picked up no lint from the sewing tables. A comparable batch which had not received the antistatic treatment required careful brushing and picking before the garments could be packed.

Example 9
Effect of Tertiary Amine Oxide Preparation on Soiling
The improvement found in the soiling properties following an Aliquat 336/tertiary amine oxide treatment compared to those of previously disclosed commercial formulations of the polyether type is exemplified in the following.

Woollen carpet yarn (approximately R500/2 tex, normal twist level) dyed to a yellow-beige colour was treated by exhaustion in a hank-dyeing machine with one or other of the following treatments:

1. with 0.6% oww of Aliquat 336 contained in an Aliquat 336/Ammonyx LO concentrate (1 part to 3.3 parts by weight, or 1:1 on an active matter basis);
2. with 0.6% available Aliquat 336 from a polyether composition.

These treated yarns were converted into carpet of construction similar to those used previously.

These carpets were then laid in a floor trial in a busy commercial arcade, together with an untreated woollen velour carpet of comparable colour and structure. Tristimulus values were measured on these carpets at intervals and were converted to colour difference (E) values using the CIELAB formula.

| E values at various tread counts | | | | |
|---|---|---|---|---|
|  | 3000 treads | 12500 | 24300 | 44000 |
| std woollen velour | 8.2 | 11.2 | 14.1 | 16.4 |
| amine oxide recipe | 4.8 | 8.6 | 10.9 | 12.9 |
| polyether recipe | 11.0 | 14.3 | 17.7 | 19.9 |

This experiment, which lists the average faults for duplicate samples in the trial, indicates that the amine oxide type of formulation has a significant benefit in reducing subsequent soiling compared to the polyether type of formulation.

Although all the examples of soluble formulations, stable dispersions, and application procedures given above are expressed in terms of specific products, comparable results will be achieved with other formulations within the scope of the invention which involve the solubilisation of any quaternary ammonium compound normally having very restricted water solubility, irrespective of the nature of the

6

**0 103 331**

substituents on the nitrogen or the incorporation of the nitrogen into ring systems. Exemplary amine oxide-type surfactants include, in addition to the cited lauryl dimethyl amine oxide, related compounds such as stearyl dimethyl amine oxide, compounds in which the nitrogen of the amine oxide is in a heterocycle, as in N-dodecylmorpholine oxide, and in imidazoline oxides, compounds which are diamine oxides, such as N-dodecyl-N,N',N'-trimethyl-1,3-propylene diamine-N,N' dioxide, and other substituted propylene diamine derivatives such as products of the Ethoduomeen (Registered Trademark) T/13 N,N' dioxide commercial class. All comments made above in reference to the uncharged form of tertiary amine oxides as found in basic or neutral solution apply also to the hydroxylammonium cation forms of these compounds formed in acid solution.

Sulphoxide surfactants behave similarly to amine oxide surfactants in forming homogeneous solutions of water-insoluble quaternary ammonium compounds, and all the application procedures and uses of the amine oxide formulations apply to suitable sulphoxide surfactant preparations also, as well as phosphine oxide surfactants.

## Claims

1. A textile treatment composition which comprises a water insoluble quaternary ammonium salt and a non-ionic surfactant characterised in that said quaternary ammonium compound has its nitrogen atom substituted with three alkyl groups of at least eight carbon atoms each, and said non-ionic surfactant is selected from the phosphine oxides, the sulphoxides, or the tertiary amine oxides containing at least one long-chain alkyl group of at least 12 carbon atoms.

2. A composition according to claim 1 in which said non-ionic surfactant is an amine oxide.

3. A composition according to either of claims 1 or 2 in which said non-ionic surfactant is lauryl dimethyl amine oxide, stearyldimethyl amine oxide, N-dodecylmorpholine oxide, N-dodecyl-N,N',N'-trimethyl-1,3-propylene diamine-N,N' dioxide or other substituted propylene diamine derivative.

4. A composition according to any one of claims 1 to 3 in which the weight ratio of non-ionic surfactant to quaternary ammonium salt is from 1.7 to less than 0.5.

5. A method of treating textile materials to render them antistatic which comprises applying thereto a composition characterised in that the composition is as claimed in any one of claims 1 to 4 diluted with water.

6. A method according to claim 5 in which the textile material is composed of keratinous fibres.

7. A method according to either of claims 5 or 6 in which the textile material is in the form of yarn, roving, slubbing or loose stock and in which the composition is applied by exhaustion.

8. A method according to either of claims 5 or 6 in which the textile material is in the form of piece goods or carpets and the composition is applied by foam or spray application techniques.

9. A method according to either of claims 5 or 6 in which the textile material is a carpet and the composition is applied in situ using a shampoo machine, or a spray application technique.

## Patentansprüche

1. Textilbehandlungs-Zusammensetzung, die ein in Wasser unlösliches quaternäres Ammoniumsalz und ein nicht-ionisches oberflächenaktives Agens enthält, dadurch gekennzeichnet, daß die quaternäre Ammoniumverbindung an ihrem Stickstoffatom substituiert ist durch drein Alkylgruppen mit jeweils mindestens 8 Kohlenstoffatomen und daß das nicht-ionische oberflächenaktive Agens ausgewählt wird aus den Phosphinoxiden, den Sulfoxiden oder den tertiären Aminoxiden, die mindestens eine langkettige Alkylgruppe mit mindestens 12 Kohlenstoffatomen enthalten.

2. Zusammensetzung nach Anspruch 1, in der das nichtionische oberflächenaktive Agens ein Aminoxid ist.

3. Zusammenzetzung nach Anspruch 1 oder 2, in der das nicht-ionische oberflächenaktive Agens Lauryldimethylaminoxid, Stearyldimethylaminoxid, N-Dodecylmorpholinoxid, N-Dodecyl-N,N',N'-trimethyl-1,3-propylendiamin-N,N'-dioxid oder ein anderes substituiertes Propylendiaminderivat ist.

4. Zusammensetzung nach einem der Ansprüche 1 bis 3, in der das Gewichtsverhältnis zwischen dem nicht-ionischen oberflächenaktiven Agens und dem quaternären Ammoniumsalz 1,7 bis weniger als 0,5 beträgt.

5. Verfahren zur Behandlung von Textilmaterialien, um sie antistatisch zu machen, das umfaßt das Aufbringen einer Zusammensetzung, dadurch gekennzeichnet, daß die Zusammensetzung eine solche nach einem der Ansprüche 1 bis 4, verdünnt mit Wasser, ist.

6. Verfahren nach Anspruch 5, bei dem das Textilmaterial aus Keratinfasern besteht.

7. Verfahren nach Anspruch 5 oder 6, bei dem das Textilmaterial in Form eines Garns, eines Gespinstes, eines Vorgespinstes oder eines losen Materials vorliegt und bei dem die Zusammensetzung durch Ausschöpfen aufgebracht wird.

8. Verfahren nach Anspruch 5 oder 6, bei dem das Textilmaterial in Form von Stückwaren oder Teppichen vorliegt und die Zusammensetzung unter Anwendung einer Schaum- oder Sprühauftragsmethode aufgebracht wird.

9. Verfahren nach Anspruch 5 oder 6, bei dem das Textilmaterial ein Teppich ist und die

**0 103 331**

Zusammensetzung in situ unter Verwendung einer Shampoo-Maschine oder unter Anwendung einer Sprüh-Auftragsmethode aufgebracht wird.

**Revendications**

1. Composition de traitement de textile, qui comprend un sel d'ammonium quaternaire insoluble dans l'eau et un agent tensioactif non-ionique, caractérisée en ce que l'atome d'azote du composé ammonium quaternaire est substitué par trois groupes alkyle comportant chacun au moins 8 atomes de carbone, et en ce que ledit agent tensioactif non-ionique est choisi parmi les oxydes de phosphine, les sulfoxydes ou les oxydes d'amine tertiaire contenant au moins un groupe alkyle à longue chaîne d'au moins 12 atomes de carbone.

2. Composition suivant la revendication 1, dans laquelle ledit agent tensioactif non-ionique est un oxyde d'amine.

3. Composition suivant la revendication 1 ou 2, dans laquelle ledit agent tensioactif non-ionique est l'oxyde de lauryldiméthylamine, l'oxyde de stéaryldiméthylamine, l'oxyde de N-dodécylmorpholine, le N,N'-dioxyde de N-dodécyl-N,N',N'-triméthyl-1,3-propylènediamine ou un autre dérivé substitué de propylènediamine.

4. Composition suivant l'une quelconque des revendications 1 à 3, dans laquelle le rapport pondéral de l'agent tensioactif non-ionique au sel d'ammonium quaternaire est de 1,7 à moins de 0,5.

5. Procédé de traitement de matières textiles pour les rendre antistatiques, ledit procédé, qui comprend l'application d'une composition à ces matières, étant caractérisé en ce que la composition est une composition suivant l'une quelconque des revendications 1 à 4 diluée avec de l'eau.

6. Procédé suivant la revendication 5, dans lequel la matière textile est composée de fibres kératiniques.

7. Procédé suivant l'une des revendications 5 ou 6, dans lequel la matière textile est sous la forme de fil, mèche, filage ou matière en vrac et dans lequel la composition est appliquée par épuisement.

8. Procédé suivant la revendication 5 ou 6, dans lequel la matière textile est sous la forme d'articles unitaires ou de tapis et la composition est appliquée par des techniques d'application de mousse ou de pulvérisation.

9. Procédé suivant la revendication 5 ou 6, dans lequel la matière textile est un tapis et la composition est appliquée in situ au moyen d'une machine à shampoing ou d'une technique d'application par pulvérisation.

8